# EUROPEAN PATENT APPLICATION

(11) **EP 4 778 650 A1**
(43) Date of publication of application: **22.07.2026**
(21) Application number: 24885463.0
(22) Date of filing: 17.10.2024
(51) Int. Cl.: B22F 1/00, B22F 1/05, B22F 1/052, B22F 9/00, B22F 9/04, B22F 9/30, B23K 35/32, B23K 35/34, C01B 6/02, C01G 23/00, C22C 1/047

(54) **TITANIUM HYDRIDE POWDER AND ACTIVE METAL BRAZING MATERIAL**

(30) Priority: 02.11.2023 JP 2023188770; 24.09.2024 JP 2024165453
(71) Applicant: Toho Technical Service Co., Ltd., Chigasaki City, Kanagawa 253-0041 (JP)
(72) Inventor: HAYAKAWA,Masashi, Chigasaki-shi, Kanagawa 253-0041 (JP); TAKENAKA,Shigehisa, Chigasaki-shi, Kanagawa 253-0041 (JP)
(74) Representative: Mewburn Ellis LLP
(86) International application number: PCT/JP2024/037056
(87) International publication number: WO 2025/094689

(57) **Abstract**

The titanium hydride powder according to this invention contains TiH₂ and is used in an active metal brazing material. When analyzed by an image analysis method, the titanium hydride powder has an average particle diameter D50 in a range of 0.1 µm to 10.0 µm, and has a proportion of particles having a particle diameter of 15 µm or more of 15% or less.

## Description

### [Technical Field]

The present invention relates to titanium hydride powder containing TiH₂ and an active metal brazing material.

### [Background Art]

For example, small pieces generated during the crushing of sponge blocks obtained by the reduction of titanium tetrachloride with metallic magnesium, as well as chips and other scrap generated during the machining of ingots or slabs cast by melting the crushed sponge titanium, may be subjected to the hydrogenation-dehydrogenation method (so-called HDH method).

In the hydrogenation-dehydrogenation method, the above small pieces and scrap are subjected to a hydrogenation treatment by heating them in a hydrogen gas atmosphere to embrittle them, and then ground to a predetermined particle size to produce titanium hydride powder. Subsequently, the titanium hydride powder is heated in a vacuum as a dehydrogenation treatment to produce titanium powder (pure titanium powder).

The titanium hydride powder obtained prior to the dehydrogenation treatment in the hydrogenation-dehydrogenation method contains the metal hydride TiH₂ and can be used for various applications in addition to the production of titanium powder by the above hydrogenation-dehydrogenation method.

As related art, Patent Literature 1 describes a "method for producing titanium powder by a hydrogenation-dehydrogenation method, the method including grinding the titanium hydride to an average particle diameter of 10 µm or less, and setting a dehydrogenation temperature to 300 to 600°".

Furthermore, Patent Literature 2 describes "a titanium-based powder obtained by the hydrogenation-dehydrogenation method, wherein the titanium-based powder has particle properties with a particle diameter range of 5 to 74 µm and an average particle diameter of 20 µm or less, and exhibits flow characteristics with a flowability of less than 100 sec/50 g". Patent Literature 2 further discloses: "the particle size adjustment step of the present invention is an operation stage in which the above titanium hydride powder or titanium hydride alloy powder, which has been ground after the hydrogenation step, is mechanically ground and classified to adjust the particle size to a range of 5 to 74 µm and an average particle diameter of 20 µm or less."

It is recognized that both the "titanium hydride" described in Patent Literature 1 and the " titanium hydride powder " described in Patent Literature 2 are used in the production of titanium powder by the hydrogenation-dehydrogenation method.

Patent Literature 3 discloses: "that is, the titanium-based powder for paste according to the present invention is characterized by having an average particle diameter of 20 µm or less, a d90 of 22.50 µm or less, and parameters α and β related to the particle size distribution satisfying the following relational expression: 0.6 < β/α < 1.0 ... (1) in which α = (d90 - d50)/d50 and β = (d50 - d10)/d50, and d10, d50, and d90 mean the particle diameters corresponding to the 10%, 50%, and 90% cumulative weight in the cumulative frequency distribution of the titanium-based powder"; and further discloses: "furthermore, the titanium-based powder for paste of the present invention is preferably titanium hydride powder produced by a hydrogenation-pulverization method, or metallic titanium powder produced using the former as a raw material". Patent Literature 3 also discloses: "the present invention produces the effect of being suitably usable as a paste for manufacturing titanium sheets suitable for use as electrodes in dye-sensitized solar cells and secondary batteries".

### [Citation List]

### [Patent Literature]

[PTL 1] Japanese Patent Application Publication No. H03-122205 A
[PTL 2] Japanese Patent Application Publication No. H07-278601 A
[PTL 3] Japanese Patent No. 5898761 B

### [Summary of Invention]

### [Technical Problem]

By the way, active metal brazing materials used for joining applications such as the joining of ceramic materials and metallic materials, which are difficult to be joined using conventional brazing materials, may contain Ti, and titanium hydride powder may be used for this purpose.

In this case, the titanium hydride powder is required to be capable of enhancing the reactivity of the Ti in the active metal brazing material with the material to be joined, such as a ceramic material, and of improving the wettability between the active metal brazing material and the material to be joined. Patent Literature 1 to 3 do not address such applications or aspects of titanium hydride powder.

An object of this invention is to provide titanium hydride powder suitable for use in an active metal brazing material, as well as an active metal brazing material.

### [Solution to Problem]

As a result of intensive studies, the inventors have found that when titanium hydride powder having a predetermined particle diameter or particle size distribution is used in an active metal brazing material, compounds form almost uniformly at the bonding interface between the Ti in the active metal brazing material and the material to be joined. The inventors believe that this has been achieved because, in addition to the above specific particle size adjustment resulting in a higher number of powder particles per unit volume of the brazing material compared to conventional methods and a smaller variation in powder density within the brazing material, the small variation in particle size and the large specific surface area led to the uniform and homogeneous formation of compounds having relatively uniform size during the reaction step.

The titanium hydride powder according to this invention contains TiH₂ and is used in an active metal brazing material. When it is analyzed by an image analysis method, it has an average particle diameter D50 in the range of 0.1 µm to 10.0 µm, and has a proportion of particles having a particle diameter of 15 µm or more of 15% or less.

In the above titanium hydride powder, it is preferable that, when it is analyzed by an image analysis method, the proportion of particles having a particle diameter of 15 µm or more is 10% or less.

In the above titanium hydride powder, it is preferable that the maximum particle diameter as determined by an image analysis method is 50 µm or less.

In the above titanium hydride powder, it is preferable that the maximum particle diameter as determined by an image analysis method is 35 µm or less.

In the above titanium hydride powder, it is preferable that, when it is analyzed by an image analysis method, the larger of the difference between the average particle diameter D50 and the 10% particle diameter D10, and a difference between the 90% particle diameter D90 and the average particle diameter D50, is 10 µm or less.

In the above titanium hydride powder, it is preferable that, when it is analyzed by an image analysis method, a larger of a difference between the average particle diameter D50 and the 10% particle diameter D10, and a difference between the 90% particle diameter D90 and the average particle diameter D50, is 8 µm or less.

The above titanium hydride powder is particularly suitable for use in an active metal brazing material used for joining ceramic materials and metallic materials.

The active metal brazing material according to this invention contains any one of the above titanium hydride powders.

### [Advantageous Effects of Invention]

The titanium hydride powder according to this invention can be suitably used in an active metal brazing material.

### [Description of Embodiments]

Embodiments of the present invention will be described in detail below.

### (Titanium Hydride Powder)

The titanium hydride powder according to one embodiment of this invention contains TiH₂ and is used in an active metal brazing material.

Active metal brazing, which uses active metal brazing materials, is a method often applied to join ceramic materials to one another or to join ceramic materials to metallic materials, and may also be referred to as Active-Metal Method. In active metal brazing, the Ti contained in the titanium hydride powder within the active metal brazing material reacts with the materials to be joined, thereby improving the wettability between the active metal brazing material and the materials to be joined. Therefore, this method can be applied to materials to be joined that are difficult to be joined using conventional brazing materials.

On the other hand, it cannot be said that the properties of titanium hydride powder capable of enhancing the reactivity between the Ti in the active metal brazing material and the materials to be joined have been sufficiently investigated to date. In contrast, the inventors have newly found that if titanium hydride powder has a relatively small particle diameter and contains relatively few particles of a predetermined large particle diameter, compounds form uniformly at the bonding interface between the Ti and the materials to be joined when used in an active metal brazing material. The inventors believe that this has been achieved because, in addition to the above specific particle size adjustment resulting in a higher number of powder particles per unit volume of the brazing material compared to conventional methods and a smaller variation in powder density within the brazing material, the small variation in particle size and the large specific surface area led to the uniform and homogeneous formation of compounds having relatively uniform size during the reaction step.

Based on these findings, the titanium hydride powder of this embodiment has an average particle diameter D50 in a range of 0.1 µm to 10.0 µm, and a proportion of particles having a particle diameter of 15 µm or more of 15% or less.

If the average particle diameter D50 is more than 10.0 µm, the specific surface area decreases, resulting in insufficient reactivity with the materials to be joined during active metal brazing. On the other hand, if the average particle diameter D50 is less than 0.1 µm, handling in air becomes difficult due to the risk of ignition, making it impractical. From this perspective, it is preferable that the average particle diameter D50 of the titanium hydride powder be in the range of 0.1 µm to 10.0 µm, and more preferably in the range of 5.0 µm to 8.0 µm.

Furthermore, if the proportion of particles having a particle diameter of 15 µm or more is more than 15%, the likelihood of coarse particles being generated during active metal brazing increases, and a resulting decrease in reactivity with the materials to be joined cannot be denied. In this case, there is also concern that the overall or partial thickness of the joint layer formed by the active metal brazing material may increase due to the formation of the above coarse particles between circuit boards, such as ceramic materials or metallic materials, that are joined using the active metal brazing material. Therefore, it is desirable to have as few particles as possible with a particle diameter of 15 µm or more, and a proportion of 13% or less is preferable, and 10% or less is even more preferable.

The maximum particle diameter of the titanium hydride powder is preferably 50 µm or less, and more preferably 35 µm or less. When the maximum particle diameter is smaller as described above, the formation of coarse particles during active metal brazing is suppressed, and mechanical properties such as joint strength after joining are stabilized. The maximum particle diameter of the titanium hydride powder may, for example, be 50 µm or more, and typically 60 µm or more.

For titanium hydride powder, the larger of the difference between the average particle diameter D50 and the 10% particle diameter D10 (D50-D10) and the difference between the 90% particle diameter D90 and the average particle diameter D50 (D90-D50) is preferably 10 µm or less, and even more preferably 8 µm or less. A small difference between the average particle diameter D50 and the 10% particle diameter D10, or between the 90% particle diameter D90 and the average particle diameter D50, means that the particle size distribution of the titanium hydride powder is narrow. When the larger of these differences is small as described above, relatively small particles are uniformly generated during active metal brazing, and the mechanical properties are considered to be further stabilized.

The average particle diameter D50, the 10% particle diameter D10, and the 90% particle diameter D90 described above, as well as the proportion of particles having a given particle diameter, are each determined by analysis using an image analysis method. More specifically, using the particle shape image analysis device PITA-04 (manufactured by Seishin Enterprise Co., Ltd.; conditions: dispersion medium: IPA, pump speed: 2000 Hz), an image containing projected images of 5,000 or more titanium hydride powder particles is acquired, and the particle diameter of each particle is calculated as a diameter of a sphere having an area equal to the projected area of that particle in the image. This yields a number-based cumulative distribution on a graph with the particle diameter on the horizontal axis and the cumulative frequency of particle count on the vertical axis. The average particle diameter D50, the 10% particle diameter D10, and the 90% particle diameter D90 refer to the particle diameters at which the number-based cumulative frequency reaches 50%, 10%, and 90%, respectively, in the above cumulative distribution. Furthermore, the proportion of particles having a particle diameter of 15 µm or more can also be determined from the above cumulative distribution. The maximum particle diameter refers to the particle diameter of the largest particle among the above 5,000 particles.

Furthermore, the titanium hydride powder preferably has a specific surface area of 0.6 to 3.0 m²/g, and more preferably 1.0 to 2.0 m²/g. This is because a larger specific surface area is expected to further improve reactivity due to an increase in the contact area with the materials to be joined. The specific surface area is measured using the BET method with N₂ gas.

The titanium hydride powder contains TiH₂ and typically consists mainly of TiH₂. The hydrogen concentration in TiH₂ is at most 4 mass%, and the presence of TiH₂ in the titanium hydride powder can be confirmed by analyzing the hydrogen concentration using the inert gas fusion-thermal conductivity method.

Titanium hydride powder may contain impurities such as Fe, Si, Mn, Mg, Cl, N, and/or O in amounts of 0.1 mass% or less. Additionally, other impurities may be present in amounts below the detection limit. The presence and content of impurities can be confirmed using ICP emission spectroscopy (Fe, Si, Mn, Mg), silver nitrate titration (Cl), amidosulfuric acid titrimetric method after ammonium distillation separation (N), and inert gas fusion-infrared absorption spectroscopy (O).

### (Production Method)

The titanium hydride powder described above can be produced, for example, by performing the steps up to the point prior to subjecting the titanium raw material to a dehydrogenation treatment in the hydrogenation-dehydrogenation method under predetermined conditions. In other words, the titanium hydride powder is obtained prior to the dehydrogenation step in the hydrogenation-dehydrogenation method under predetermined conditions.

In the hydrogenation-dehydrogenation method, the titanium raw material is first subjected to a hydrogenation step. As the titanium raw material, one can use small pieces generated when crushing sponge titanium blocks, or cutting powder or chips and other scrap generated during the machining of ingots or slabs produced by melting and casting using the sponge titanium obtained from such crushing. It should be noted that the above sponge titanium blocks are produced by reducing titanium tetrachloride with metallic magnesium and consist primarily of Ti.

In the hydrogenation step, the titanium raw material may be heated to a temperature of, for example, 500°C or higher, and hydrogen gas may be fed thereto. As a result, the titanium raw material absorbs hydrogen to form TiH₂, thereby becoming a hydrogenated raw material.

Subsequently, the hydrogenated raw material is subjected to a grinding step and a classification step. At this time, a grinding apparatus equipped with an impact-type grinding rotor and an air classification apparatus equipped with a classification rotor may be used. Air classification not only allows for the separation of powders in a relatively fine range but also enables fine adjustment of the classification point, making it suitable for the production of the titanium hydride powder according to the embodiment described above. By adjusting the rotational speeds of the above impact-type grinding rotor and classification rotor, it is possible to produce titanium hydride powder having a predetermined particle diameter and particle size distribution. On the other hand, when producing titanium powder, the titanium hydride powder is subjected to a dehydrogenation step after recovery.

The titanium hydride powder produced as described above often has a polyhedral shape rather than a spherical one due to the grinding step. Consequently, it is believed that when this titanium hydride powder is used in an active metal brazing material, its reactivity with the materials to be joined is significantly enhanced. In addition, since the titanium powder obtained after the dehydrogenation step tends to have larger particle diameters as a result of sintering promoted during the dehydrogenation treatment, even if it is further subjected to the hydrogenation treatment, it may not result in the fine titanium hydride powder as in this embodiment. As used herein, the term "fine titanium hydride powder" refers to a powder in which, when it is analyzed using the image analysis method described above, the average particle diameter D50 is in the range of 0.1 µm to 10.0 µm, and the proportion of particles having a particle diameter of 15 µm or more (cumulative distribution based on particle count) is 15% or less.

### (Active Metal Brazing Material)

The titanium hydride powder described above is used in active metal brazing materials employed for active metal brazing. The titanium hydride powder may be contained in at least a part of the active metal brazing material.

The active metal brazing material can typically be used in applications such as joining ceramic materials, such as circuit boards, and metallic materials by active metal brazing. Examples of the ceramic materials include oxide-based, nitride-based, or carbide-based ceramics, specifically, Al₂O₃, SiC, Si₃N₄, AlN, and ZrO₂. An example of the metallic material includes Cu.

The active metal brazing materials include those in the form of powder, sheet, and paste. For example, the active metal brazing material in the form of paste may contain organic substances such as organic solvents in addition to the above titanium hydride powder, and may be prepared by dispersing a powder containing titanium hydride powder in an organic solvent. Other powders contained in the active metal brazing material, other than the titanium hydride powder, include silver powder and copper powder. Titanium hydride powder may be mixed into such powder as an additive.

The active metal brazing may be performed by arranging the active metal brazing material on one material to be joined by coating or the like, and the active metal brazing material is sandwiched between the one material to be joined and the other material to be joined, and heating them in such a state. At this time, for the active metal brazing material in the form of paste, the organic solvent volatilizes and the other powders melt, while Ti reacts with the components of the materials to be joined (such as Al₂O₃) to form compounds (such as Al-Ti-O), thereby chemically bonding the active metal brazing material to the materials to be joined. For the active metal brazing material containing the titanium hydride powder according to the above embodiment, the titanium hydride powder, which is distributed relatively uniformly and densely over the target surface, forms compounds having equivalent size in a uniform and homogeneous manner. As a result, the effective reactivity between Ti and the materials to be joined increases, which is believed to improve the joint strength between the materials to be joined using the active metal brazing material.

### [Examples]

Next, titanium hydride powder according to this invention was experimentally produced, which is described below. However, descriptions herein are merely for illustration, and are not intended to be limited thereto.

### (Examples 1 to 4)

Titanium hydride powder was produced by subjecting chips generated during the machining of titanium ingots to a hydrogenation step, a grinding step, and a classification step using the hydrogenation-dehydrogenation method. In the hydrogenation step, the chips were heated to 600°C or higher while being placed in a hydrogen gas atmosphere created by feeding a hydrogen gas, thereby obtaining a hydrogenated raw material.

Subsequently, in the grinding and classification steps, the grinding conditions and classification conditions were fine-tuned at around a classification point of 10 µm, and titanium hydride powders having different particle size distributions were obtained by recovering the fine powder fraction.

### (Comparative Examples 1 to 4)

The coarse powders recovered in Examples 1 to 4 were further air-classified to obtain titanium hydride powders having different particle size distributions. Here, the classification point for Comparative Example 1 was set to 20 µm, and the classification point for Comparative Examples 2 to 4 was each set to 45 µm. In Comparative Examples 1, 2, and 4, a dehydrogenation treatment was performed by heating to a temperature of 500°C or higher in a vacuum. This provided titanium powders (pure titanium).

### (Evaluation 1: Particle Size Distribution Measurement)

For each of the titanium hydride powders and titanium powders according to Examples 1 to 4 and Comparative Examples 1 to 4, the average particle diameter D50, the 10% particle diameter D10, the 90% particle diameter D90, the maximum particle diameter, and the proportion of particles having a particle diameter of 15 µm or more were measured according to the method described above. The results are shown in Tables 1 and 2.

### (Evaluation 2: Alumina Plate Bonding Test)

For each of the titanium hydride powders and titanium powders according to Examples 1 to 4 and Comparative Examples 1 to 4 (hereinafter referred to as "test powders"), an alumina plate bonding test was conducted according to the procedure described below. The results are shown in Table 2.
(1) Approximately 1 g of the test powder was spread onto a 15 × 15 × 1.5 mm thick alumina plate placed on a SUS tray.
(2) An alumina plate having the same size as in (1) was stacked on top of the alumina plate covered with the test powder, and a quartz plate was placed on top of that plate.
(3) Several quartz plates were stacked on top of the quartz plate to adjust the height, and a titanium plate weighing approximately 130 g was placed on top as a weight to prepare the test sample.
(4) The resulting test sample was subjected to a heat treatment at 800°C for 90 minutes in a vacuum atmosphere of 10 Pa or less.
(5) For the test sample after the heat treatment, whether the alumina plates were bonded was confirmed.
(6) To evaluate the bonding of the heat-treated test samples, a shear test was conducted in which one end face of the stacked alumina plates was fixed, a 5 kg weight was placed on the other end face (area: 15 mm × 1.5 mm), and the sample was subjected to a shear load in the horizontal direction of the bonding surface to check for any damage. In this test, a result was deemed "Unacceptable" if the bonded alumina plates delaminated or the solidified test powder fractured, rendering it unusable for the thermal conductivity measurement described below.

### (Evaluation 3: Thermal Conductivity Measurement)

For each of the titanium hydride powders and titanium powders according to Examples 1 to 4 and Comparative Examples 1 to 4 (hereinafter referred to as "test powders"), test samples were prepared in the same manner as in the alumina plate bonding test in Evaluation 2, and the thermal conductivity was measured in accordance with the US standard "ASTM E 1530". The results are shown in Table 2.

The measurement apparatus used was a steady-state thermal conductivity measuring device (GH-1, manufactured by Advance Riko Co., Ltd.). In preparing the test samples, 25 × 25 × 1.5 mm thick alumina plates were used, and the amount of test powder applied was approximately 0.1 g.

**[Table 1]**

| | Material | Number of Observed Particles (count) | D10 | D50 | D90 | Maximum Particle Diameter | D50-D10 | D90-D50 |
|---|---|---|---|---|---|---|---|---|
| | | | (µm) | | | | | |
| Ex. 1 | TiH₂ | 5103 | 3.35 | 6.42 | 10.89 | 20.1 | 3.1 | 4.5 |
| Ex. 2 | TiH₂ | 5000 | 2.79 | 536 | 9.24 | 18.7 | 2.6 | 3.9 |
| Ex. 3 | TiH₂ | 5000 | 3.87 | 6.74 | 11.07 | 22.4 | 2.9 | 4.3 |
| Ex. 4 | TiH₂ | 5000 | 4.03 | 7.21 | 11.47 | 25.8 | 3.2 | 4.3 |
| Comp. 1 | Ti | 5009 | 9.03 | 14.08 | 19.31 | 32.0 | 5.0 | 5.2 |
| Comp. 2 | Ti | 5001 | 11.33 | 18.94 | 32.90 | 61.4 | 7.6 | 14.0 |
| Comp. 3 | TiH₂ | 5005 | 13.60 | 22.64 | 37.97 | 61.4 | 9.0 | 15.3 |
| Comp. 4 | Ti | 5000 | 14.86 | 25.60 | 38.88 | 50.9 | 10.7 | 13.3 |

**[Table 2]**

| | Cumulative proportion of particles 15 µm or more (%) | Number of particles 15 µm or more | Alumina plate bonding (Acceptable /Unacceptable) | Thermal conductivity of bonded alumina plate samples (W m⁻¹K⁻¹) |
|---|---|---|---|---|
| Ex. 1 | 3.5 | 181 | Acceptable | 3.52 |
| Ex. 2 | 2.6 | 130 | Acceptable | 3.79 |
| Ex. 3 | 7.4 | 370 | Acceptable | 3.41 |
| Ex. 4 | 9.3 | 465 | Acceptable | 3.23 |
| Comp. 1 | 52.4 | 2625 | Acceptable | 0.90 |
| Comp. 2 | 79.1 | 3958 | Unacceptable | - |
| Comp. 3 | 89.3 | 4468 | Unacceptable | - |
| Comp. 4 | 92.5 | 4626 | Unacceptable | - |

## Claims

1. A titanium hydride powder comprising TiH₂ and used in an active metal brazing material,
wherein, when analyzed by an image analysis method, an average particle diameter D50 is in a range of 0.1 µm to 10.0 µm, and a proportion of particles having a particle diameter of 15 µm or more is 15% or less.

2. The titanium hydride powder according to claim 1, wherein, when analyzed by an image analysis method, the proportion of particles having a particle diameter of 15 µm or more is 10% or less.

3. The titanium hydride powder according to claim 1, wherein a maximum particle diameter as determined by an image analysis method is 50 µm or less.

4. The titanium hydride powder according to claim 3, wherein the maximum particle diameter as determined by an image analysis method is 35 µm or less.

5. The titanium hydride powder according to claim 1, wherein, when analyzed by an image analysis method, the larger of the difference between the average particle diameter D50 and the 10% particle diameter D10, and the difference between the 90% particle diameter D90 and the average particle diameter D50, is 10 µm or less.

6. The titanium hydride powder according to claim 5, wherein, when analyzed by an image analysis method, the larger of the difference between the average particle diameter D50 and the 10% particle diameter D10, and the difference between the 90% particle diameter D90 and the average particle diameter D50, is 8 µm or less.

7. The titanium hydride powder according to claim 1, wherein the active metal brazing material is used for joining ceramic materials and metallic materials.

8. An active metal brazing material comprising the titanium hydride powder according to any one of claims 1 to 7.
